# EUROPEAN PATENT APPLICATION

(11) **EP 2 133 834 A1**
(43) Date of publication of application: **16.12.2009**
(21) Application number: 09460024.4
(22) Date of filing: 10.06.2009
(51) Int. Cl.: G06Q 30/00

(54) **A method of distribution of marketing materials, designated for handheld electronic devices, in particular mobile phones**

(30) Priority: 11.06.2008 PL 38541608
(71) Applicant: Tkaczyk, Mariusz, 05-090 Raszyn (PL)
(72) Inventor: Tkaczyk, Mariusz, 05-090 Raszyn (PL)

(57) **Abstract**

Carried out via server (1) which is programmed in such a way as to be able to store the data left by the broadcasters related to a specific object (person, company, product) or a few objects at the same time, included in packets (2) which can be distinguished with the use of an identification code (Y). The code is provided by the broadcaster at objects beyond the server (1) so the customer can have the opportunity to make use of distribution by forwarding this particular code (Y) to the server (1) through an interface (3) together with the phone number or other number enabling the connection with the target device (4). The server (1) through telecommunication systems (5) at a suitable time will establish a connection with the target device (4) to send the data included in the packet (2).

## Description

The invention concerns a method of distribution of marketing materials, designated for handy electronic devices, in particular mobile phones.

Commonly known in the current state of technology is the way of distribution of materials dedicated to mobile phones where data such as text, graphics, animation, sound effects, films placed on a server adjusted for this purpose in the form of a logo, ringtone, motion picture, wallpaper (hereinafter referred to as gadgets) can be sent to a mobile phone. Through the interface (e.g. www website or television) the customer chooses the gadget on the basis of its content, each gadget has a code identifying it among other gadgets and the customer needs to get the code and enter it into the phone to transmit it to the server at the same time transmitting the phone number to which the gadget is supposed to be sent and paying by the way (sms Premium) and the server will send the gadget to the mobile phone or a link to the gadget through the telecommunication systems.

Commonly known in the current state of technology is a method of distribution of marketing materials, designated for handy electronic devices, in particular mobile phones, which are sent by the broadcaster from computer equipment or phones to phones or computer equipment and other portable electronic devices. The broadcaster chooses a packet with data saved on his device or provides a link to this data placed on the network and sends initiating a transmission to the customer's device (SMS, MMS, WAP-PUSH).

Commonly known in the current state of technology is a method of distribution of marketing materials in which the customer establishes a connection with the internet and downloads these materials from places where they are situated for this purpose.

Commonly known is the method of distribution of marketing materials in which the customer leaves his or her email address in a form and initiates the transmission of selected materials. Then when the customer wants to transfer the materials to the target device he or she goes to the email box and downloads the data.

In accordance with the invention the method of distribution of marketing materials, designated for handy electronic devices, in particular mobile phones, is carried out via server which is programmed in such a way as to be able to store the data left by the broadcasters related to marketing materials, prepared in electronic form - text, picture, animation, sound, vCard, wap, www and concerning a particular object that is a person, company, product. These materials constitute packets of data devoted to dissemination. The packets can also contain information related to several objects if the broadcaster decides so. The packets can be distinguished through the identification code. The broadcaster makes this code accessible with objects related to the packets so that the customer can make use of distribution and receive the data related to this packet. As a rule, the customer does not have to know neither the content nor the identification code of the packet if it is properly delivered thereupon. The broadcaster can situate the code in any place if only he will be determined to release this data. Through the interface together with the identification code of the packet the phone number or other number enabling the connection with the target device will be transferred to the server from the customer. After it receives this information the server processes it and at a suitable time through telecommunication systems it establishes a connection with the target device to send the data included in the packet or a link to the packet in such a format so that it won't be necessary to install a special software or equipment on the target device.

The way of distribution according to the invention is supposed to replace the standard methods of business card distribution which at the moment of establishing relations and passing it from hand to hand is a sign of politeness and an element of convention (a note from Wikipedia). Applying this way of distribution makes it possible to transmit the business card and other advertising materials directly into the hands of the interested person no matter the distance and without the necessity of the presence of the broadcaster and contact with him or her during this distribution, besides the customer does not have to in any way participate in the costs of the transmission. Thanks to the possibilities of today's technology, the sent business card with contact details to a person, company and other advertising materials such as access map, animated logo or brand, type, technical description, short advertisement of a product can be saved and used as a source of information in a mobile phone or other portable electronic device such as palmtop with a phone option.

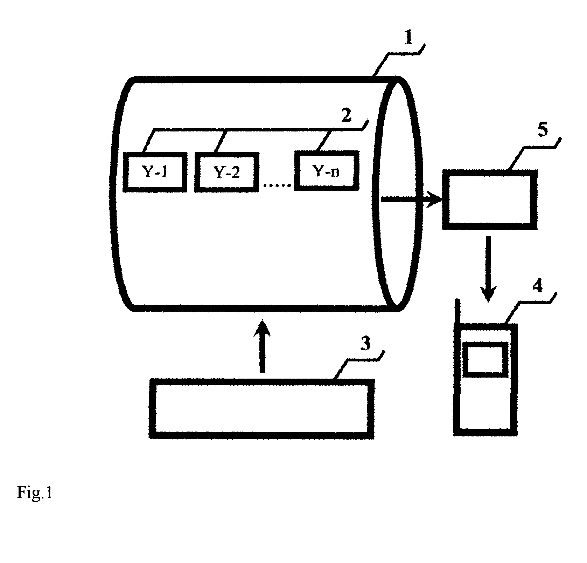

The examples of the implementation of this way of distribution are described in detail on the drawing Fig.1 - a block diagram showing the server 1 programmed in such a way that it is be able to store the data left by the broadcasters prepared in an electronic form, included in packets 2 dedicated to dissemination which can be distinguished with the use of an identification code (Y) as well as the interface to communication 3 and a target device 4 to which the data is going to be sent through telecommunication systems 5.

A broadcaster who wants to use the way of distribution according to the invention prepares the content of his/her business card in the form of text with his/her contact details and access map in the form of a picture. The broadcaster leaves the prepared data on the server 1 as a packet 2 with an identification number "Y". After paying the charge for this service his account will be activated. The broadcaster places the link to the interface 3 on his/her own website in the section containing his/her description and contact details so when the link is used the identification code "Y" is given. A person going through the broadcaster's contact data who wants to obtain such a business card dedicated to a mobile phone or other portable electronic device 4 clicks on the link prepared by the broadcaster and then is transferred to the interface 3 where he or she enters the phone number and as a customer accepts the form forwarding this data to the Server 1. The server processes this request and through the telecommunication systems 5 at a suitable time will establish a connection with the target device 4 to send the data included in the packet 2. The customer receives a text message with a text prepared by the broadcaster and WAP-PUSH with a link to a place where the access map is available. The customer is not charged for the costs connected with the text message and WAP-PUSH and costs related to the operation of this distribution because the broadcaster already paid the charges. The customer can save the received data to use it later.

A broadcaster advertising his/her company in touch screen devices (automatic machines) like cashpoint, InfoTouch, who wants to use the way of distribution according to the invention prepares the content of his business card with contact details of his/her company in the vCard format. The broadcaster leaves the prepared data on the server 1 as a packet 2 with an identification number "Y". After paying the charge for this service his account will be activated. Touching the screen a person interested in this company pushes the button on the automatic machine on the company's profile. Then on the screen a touch keyboard appears. It is an interface 3 through which the customer enters the phone number 4. Once the phone number is entered the automatic machine sends this data together with the "Y" code identifying the packet 2 to the server 1, which processes this request and through telecommunication systems 5 and at a suitable time initiates connection with the target device 4 to send the data included in the packet 2 as a text message in vCard format, which can be saved directly on the telephone directory on the phone. The customer wasn't in any way charged for the costs connected with the text message or with the operation of this distribution because the broadcaster paid the charges.

A broadcaster organizing an advertising campaign of a new product who wants to use the way of distribution of advertisements according to the invention prepares a small WAP service. The broadcaster leaves on the server 1 as a packet 2 a link - a reference to this service with an identification number "Y". Additionally, the broadcaster chooses available options that will enable sending the packet to customers of only one network and only once on one number. After paying the charge for this service his account will be activated. During advertisements of this product on the internet each clicking on the link will initiate the appearance of a form into which the customer can enter the phone number. When it happens the data from the form together with "Y" code are transferred through the interface 3 to the server 1, which processes this request and through telecommunication systems 5 and at a suitable time initiates connection with the target device 4 to send the data included in the packet 2 as WAP-PUSH with a link to the place where the prepared WAP service is situated. The customer does not pay for the distribution.

## Claims

1. Carried out via server (1) which is programmed in such a way as to be able to store the data left by the broadcasters connected with a business card or other advertising materials, stored in an electronic form, related to a particular object or a few objects at the same time, included in packets (2) dedicated to dissemination, which can be distinguished with the use of an identification code (Y). The code is available beyond the server (1) with objects connected with relevant packets so the customer can have the opportunity to make use of distribution by forwarding this particular code (Y) to the server (1) through an interface (3) together with the phone number or other number enabling the connection with the target device (4). The server (1) through telecommunication systems (5) at a suitable time will establish a connection with the target device (4) to send the data prepared in packet (2), distinguished with the use of a code (Y) in such a format so that it won't be necessary to install a special software or equipment on the target device.
